# EUROPEAN PATENT SPECIFICATION

(11) **EP 3 540 007 B1**
(45) Date of publication and mention of the grant of the patent: **30.12.2020**
(21) Application number: 19172134.9
(22) Date of filing: 06.11.2014
(51) Int. Cl.: C08L 23/08, B29C 41/04, B29C 41/00

(54) **ENHANCED ESCR BIMODAL ROTOMOLDING RESIN**
BIMODALES ROTATIONSFORMUNGSHARZ MIT ERHÖHTEM WIDERSTAND GEGEN UMGEBUNGSBEDINGTE SPANNUNGSRISSBILDUNG
RÉSINE DE ROTOMOULAGE BIMODALE SOUS CONTRAINTE ENVIRONNEMENTALE (ESCR) AMÉLIORÉE

(30) Priority: 18.11.2013 CA 2834068
(43) Date of publication of application: 18.09.2019
(62) Document number(s) of the earlier application(s) in accordance with Art. 76 EPC: 14802198.3 / 3 071 643
(73) Proprietor: Nova Chemicals (International) S.A., 1700 Fribourg (CH)
(72) Inventor: BELLEHUMEUR, Celine, Calgary, Alberta T2N 1N1 (CA); HOIDAS, Mark, Bright's Grove, Ontario N0N 1C0 (CA)
(74) Representative: Mewburn Ellis LLP

(56) References cited:
- EP-A1- 1 304 353
- CA-A1- 2 629 576
- US-A1- 2004 062 942
- US-A1- 2005 288 443
- US-A1- 2012 214 954

## Description

### TECHNICAL FIELD

The present invention relates to polyethylene for use in rotomolding articles. The polymers have exceptional environmental stress crack resistance in view of its high flow properties and stiffness which are useful in a number of custom applications including larger parts.

### BACKGROUND ART

There are a number of different considerations for manufacturing a resin suitable for use in rotomolding manufacture. The resin needs to be: capable of production at commercially acceptable rates of production; suitable for use in the rotomolding process (e.g. for example having a suitable sintering temperature and a suitable cooling rate to be removed from the mold) and finally must have suitable properties for the end use application. One important property sought is environmental stress crack resistance. The resin should not develop cracks due to exposure to chemicals, sunlight, etc. in applications such as tank sprayers for agricultural use, cisterns, and smaller rotomolded parts.

United States Patents 5,382,630, and 631 issued January 17, 1995 to Stehling, assigned to Exxon teach bimodal resins having superior physical properties. The patent requires that the blend have a two or more components each having a polydispersity (Mw/Mn) less than 3 and the blend having a polydispersity greater than 3 and no component in the blend having a relatively higher molecular weight and a lower comonomer content (i.e. the comonomer incorporation is reverse). The reference does not suggest improved ESCR.

United States Patent 6,969,741 issued Nov. 29, 2005 to Lustiger et al., assigned to ExxonMobil teaches a blend of polyethylenes suitable for rotomolding. The patent teaches the difference in the density of each component is not less than 0.030 g/cm³. The difference in the densities of the component polymers in the present composition is less than 0.030 g/cm³.

United States Patent 8,486,323 issued July 16, 2013 in the name of Davis, assigned to Dow Global technologies Inc., teaches polymer blends used in rotational molded articles and having a high impact resistance. The blends have a residual unsaturation of less than 0.06 per 1000 carbon atoms. The blends of the present invention have a residual unsaturation of greater than 0.06 per 1000 carbon atoms.

United States Patent 8,492,498 issued July 23, 2013 from an application filed Feb. 21, 2011 in the name of Buck et al., assigned to Chevron Phillips discloses a high density polymer suitable for rotational molding that has a bent strip ESCR condition A greater than 1000 hours, as determined by ASTM D 1693 in 100% IGEPAL CO-630. The polymer also has a primary structure parameter (PSP2) of greater than 8.9. The compositions of the present invention have a primary structure parameter (PSP2) of from 4 to 7.

United States Patents 8,114,946 issued Feb. 14, 2012, and 8,475,899 issued July 2, 2013 both claiming a priority date of Dec. 18, 2008 in the name of Yang et al., assigned to Chevron Phillips teach a polymer prepared using a bridged metallocene catalyst and having a long chain branches (LCB) content of less than 0.008 per 1000 carbon atoms, by implication LCB are present in the polymer. The catalyst and process used to make the polymers of the present invention do not produce detectable long chain branching.

The present invention seeks to provide a high density polyethylene resin having exceptional environmental stress crack resistance (ESCR) and good flow properties. Flow properties are important for rotomolding resins as the resin must soften and flow in the mold. If the flow properties are too low the resin does not sinter together in a reasonable amount of time and the product cannot be made in an economical manner.

### DISCLOSURE OF INVENTION

In one aspect the present invention provides a bimodal polyethylene composition having a density from 0.937 to 0.942 g/cm³, a melt index I₂ determined according to ASTM D 1238 (2.16 kg 190°C - I₂) from 4.0 to 7.0 g/10min, and I₂₁ determined according to ASTM D 1238 (21.6 kg 190°C - I₂₁) from 160 to 200 g/10 min, an I₂₁/I₂ from 30 to 40, a bent strip ESCR as determined by ASTM D 1693 in 100% octoxynol -9 for conditions A and B of greater than 1000 hours and a terminal vinyl unsaturation greater than 0.06, preferably greater than 0.08 per 1000 carbon atoms; a primary structure parameter (PSP2) of from 4 to 7, preferably 5 to 6, and an overall Mw/Mn from 2.7 to 3.5 comprising from 2 to 6 weight % of one or more C₄₋₈ alpha olefin comonomers which when de-convoluted into two components consists of:
(i) from 20 to 45, preferably 20 to 35, most preferably from 25 to 35, weight % of a first component with a branch frequency per 1000 carbon atoms by FTIR between 3 and 13, said component having a density as determined according to ASTM D 792 from 0.920 to 0.930 g/cm³; a weight average molecular weight (Mw) from 100,000 to 180,000 preferably from 110,000 to 165,000, most preferably from 120,000 to 150,000 g/mol and a polydipsersity of less than 3; and
(ii) from 80 to 55, preferably from 80 to 65, most preferably from 75 to 65 weight % of a second component comprising from 0 up to 1, preferably from 0.2 to 0.6 wt % of one or more of one or more C₄₋₈ alpha olefin comonomers and the balance ethylene said component having a density as determined according to ASTM D 792 from 0.945 to 0.955 g/cm³; a weight average molecular weight (Mw) from 15,000 to 70,000, preferably from 20,000 to 40,000 and a polydispersity of less than 3 wherein in the difference in densities between components (i) and (ii) is less than 0.030, preferably less than 0.027 g/cm³, and the polymer has no detectable long chain branches.

In a further aspect the present invention provides a bimodal polyethylene composition as above having a primary structure parameter (PSP2) from 4 to 7.

In a further aspect the present invention provides a bimodal polyethylene composition as above wherein component (i) is present in an amount from 20 to 35 weight %.

In a further aspect the present invention provides a bimodal polyethylene composition as above, wherein component (i) consists of from 1 to 25 weight % of one or more of one or more C₄₋₈ alpha olefin comonomers and the balance ethylene.

In a further aspect the present invention provides a bimodal polyethylene composition as above wherein component (i) has a weight average molecular weight (Mw) from 120,000 to 150,000 g/mol and a polydipsersity less than 3.

In a further aspect the present invention provides a bimodal polyethylene composition as above wherein component (ii) is present in an amount from 65 to 80 weight %.

In a further aspect the present invention provides a bimodal polyethylene composition as above having wherein component (ii) has a weight average molecular weight (Mw) from 20,000 to 50,000 and a polydispersity less than 3.

In a further aspect the present invention provides a bimodal polyethylene composition as above wherein the difference in densities between components (i) and (ii) is less than 0.030, preferably less than 0.027 g/cm³.

In a further embodiment the present invention provides a process to make a bimodal polyethylene composition as above, comprising feeding ethylene and one or more C₄₋₈ comonomers to two sequential solution phase reactors, in the presence of a single site catalyst comprising a phosphinimine ligand together with one or more activators.

In a further embodiment the present invention provides a rotomolded part consisting essentially of the above bimodal polyethylene composition.

### BRIEF DESCRIPTION OF DRAWINGS

Figure 1 is a plot of the molecular weight distribution obtained by gel permeation chromatograph (GPC), and the short chain branching distribution determined from GPC-FTIR of a resin of example 1.
Figure 2 is a plot of A plot of the calculated wᵢ • PSP2ᵢ values against log M for the resin of example 1.
Figure 3 is a plot of the molecular weight distribution obtained by GPC of the polymer of example 1 and the computer model predictions of the molecular weight distributions of the first and second ethylene polymers that are comprised in the polymer of example 1.
Figure 4 is a plot of the molecular weight distribution obtained by gel permeation chromatograph (GPC), and the short chain branching distribution determined from GPC-FTIR of a resin of example 1. The plot also includes the computer model predictions of the polymer molecular weight distribution as well as the short chain branching distribution.

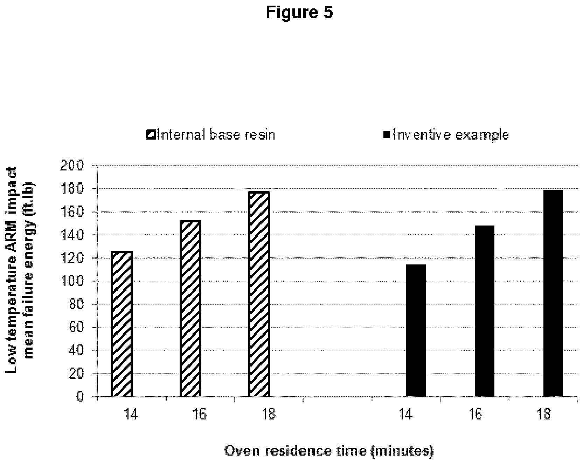

Figure 5 is a plot of the mean failure energy from ARM impact testing carried out at -40°C on specimens taken from rotomolded parts of the resin of example 1.

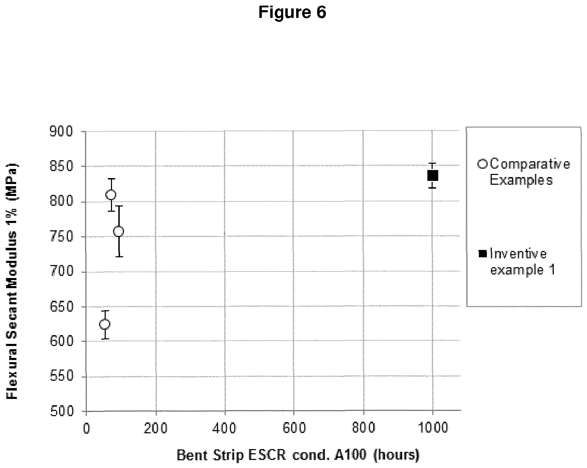

Figure 6 is a plot of the bent strip ESCR condition A 100 against the flexural secant modulus 1% in MPa for the resin of example 1.

### BEST MODE FOR CARRYING OUT THE INVENTION

### Numbers ranges

[1] Other than in the operating examples or where otherwise indicated, all numbers or expressions referring to quantities of ingredients, reaction conditions, etc. used in the specification and claims are to be understood as modified in all instances by the term "about". Accordingly, unless indicated to the contrary, the numerical parameters set forth in the following specification and attached claims are approximations that can vary depending upon the properties that the present invention desires to obtain. At the very least, and not as an attempt to limit the application of the doctrine of equivalents to the scope of the claims, each numerical parameter should at least be construed in light of the number of reported significant digits and by applying ordinary rounding techniques.
[2] Notwithstanding that the numerical ranges and parameters setting forth the broad scope of the invention are approximations, the numerical values set forth in the specific examples are reported as precisely as possible. Any numerical values, however, inherently contain certain errors necessarily resulting from the standard deviation found in their respective testing measurements.
[3] Also, it should be understood that any numerical range recited herein is intended to include all sub-ranges subsumed therein. For example, a range of "1 to 10" is intended to include all sub-ranges between and including the recited minimum value of 1 and the recited maximum value of 10; that is, having a minimum value equal to or greater than 1 and a maximum value of equal to or less than 10. Because the disclosed numerical ranges are continuous, they include every value between the minimum and maximum values. Unless expressly indicated otherwise, the various numerical ranges specified in this application are approximations.
[4] All compositional ranges expressed herein are limited in total to and do not exceed 100 percent (volume percent or weight percent) in practice. Where multiple components can be present in a composition, the sum of the maximum amounts of each component can exceed 100 percent, with the understanding that, and as those skilled in the art readily understand, that the amounts of the components actually used will conform to the maximum of 100 percent.

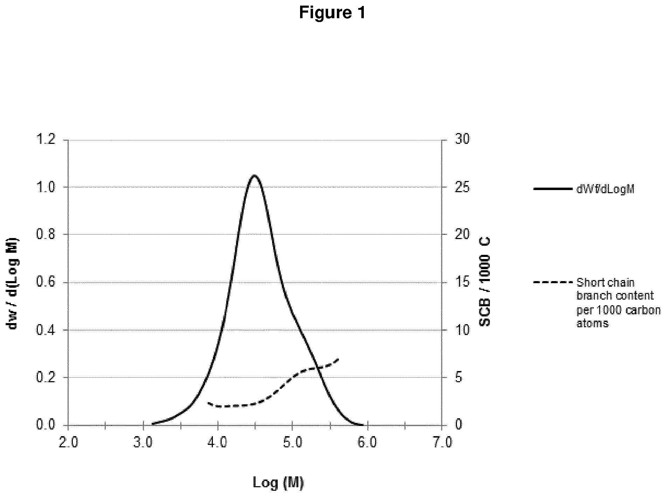

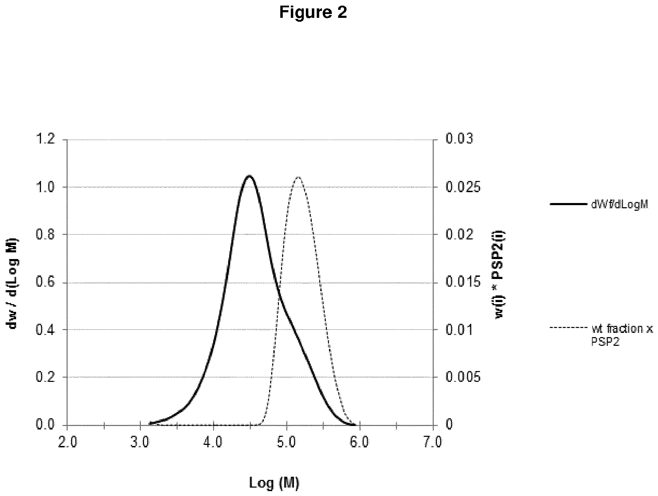

The polymers of the present invention are bimodal polyethylene and can be de-convoluted into two distinct components. Typically, this is demonstrated by the presence of a "shoulder" at the right side of a gel permeation chromatography (GPC) curve (Figure 1). In the present case there is a small shoulder to the right side of the GPC curve as shown in Figure 2 indicating a small amount of a higher molecular weight low density component.

The overall polyethylene composition comprises from 0.1 to 8.0, typically from 2.0 to 6.0 weight % of one or more C₆₋₈ alpha olefins and the balance ethylene. Preferably the comonomer is 1-octene but it could also be 1-hexene.

In the present invention, the higher molecular weight component is present in an amount from 20 to 45 weight % of the entire composition, preferably from 20 to 35 weight %, most preferably from 25 to 30 weight %, based on the weight of the entire composition. The lower molecular weight component is present in corresponding amounts from 80 to 55 weight %, of the entire composition, preferably from 80 to 65 weight %, most preferably from 65 to 75 weight % based on the weight of the entire composition.

The higher molecular weight component has a weight average molecular weight (Mw) greater than 100,000, typically from 110,000 to 165,000, preferably from 120,000 to 150,000, as determined using gel permeation chromatography (GPC). The higher molecular weight component has a polydispersity (Mw/Mn: weight average molecular weight / number average molecular weight)) less than 3 (e.g. between 2 and 3) typically less than 2.7.

The higher molecular weight component has a lower density than the lower molecular weight component. The density of the higher molecular weight component in the polymer may range from 0.920 to 0.930 g/cm³, typically from 0.922 to 0.926 g/cm³, preferably from 0.922 to 0.925 g/cm³. The density of the component, or that of any other component or the total composition, is a function of the degree of comonomer incorporation. The higher molecular weight component has a degree of short chain branching per 1000 carbon atoms from 3 to 13, typically from 4 to 10, preferably from 4 to 8. The higher molecular weight component does not have any long chain branching.

The lower molecular weight component has a weight average molecular weight (Mw) less than 100,000, typically from 15,000 to 70,000, preferably from 20,000 to 50,000, desirably from 20,000 to 40,000 g/mol, as determined using gel permeation chromatography (GPC). The lower molecular weight component has a polydispersity (Mw/Mn) less than 3 (e.g. from 2 to 3) typically less than 2.8.

The lower molecular weight component has a higher density than the higher molecular weight component. The density of the lower molecular weight component in the polymer is greater than 0.945 g/cm³, typically from 0.945 to 0.955 g/cm³, preferably from 0.947 to 0.952 g/cm³. The lower molecular weight (higher density component) has a degree of short chain branching of less than 5 per 1000 carbon atoms, typically from 0.5 to 4, preferably from 1 to 3 short chain branches per 1000 carbon atoms. The lower molecular weight component does not have any long chain branching.

The difference in density of the higher molecular weight component and the lower molecular weight components is less than 0.030 g/cm³, preferably less than 0.027 g/cm³.

The catalysts used to produce the polymers of the present invention do not produce long chain branching.

The overall properties of the polyethylene composition include the following:
density from 0.935 to 0.942 g/cm³;
melt index under a load of 2.16 kg (I₂) at a temperature of 190°C as determined by ASTM 1238 from 4 to 7, preferably from 4.5 to 6 g/10 minutes;
a melt index under a load of 21.6 kg (I₂₁) at a temperature of 190°C as determined by ASTM 1238 from 150 to 210, preferably from 160 to 200 g/10 minutes;
a melt flow ratio (I₂₁/I₂) from 28 to 40, preferably from 30 to 37;
a primary structure parameter (PSP2) from 4 to 7, preferably from 5 to 6;
an ESCR at condition A 100% IGEPAL® CO-630 (octoxynol-9) greater than 1000 hours; and
an ESCR at condition B 100% IGEPAL® CO-630 greater than 1000 hours.

Overall the composition comprises from 2 to 8, preferably from 2 to 5 weight % of one or more C₄₋₈ comonomers.

The overall polymer incorporates the following molecular features:
Short chain branch frequency /1000 carbon atoms by FTIR between 1 and 8, preferably between 3 and 6;
Comonomer content (wt. %) by FTIR from 0.1 to 8.0, preferably from 2.0 to 5.0;
Internal unsaturation per 1000 carbon atoms by FTIR from 0.07 to 0.3;
Side chain unsaturation per 1000 carbon atoms by FTIR typically less than 0.1;
Terminal unsaturation per 1000 carbon atoms by FTIR from 0.07 to 0.14;
Number average molecular weight (Mn) by GPC from 11,000 to 35,000, preferably from 20,000 to 25,000;
Weight average molecular weight Mw) by GPC from 55,000 to 82,000, preferably from 60,000 to 70,000;
Z average molecular weight (Mz) by GPC from 140,000 to 200,000, preferably from 160,000 to 180,000;
Polydispersity (Mn/Mw) from 2.7 to 5, preferably from 2.8 to 4, desirably less than 3.5;
An index (Mz/Mw) from 2.0 to 2.9, preferably from 2.30 to 2.60; and
A primary structure parameter (PSP2) of from about 4 to 7, preferably from 5 to 6.

The PSP2 calculation as outlined by DesLauriers and Rohlfing in Macromolecular Symposia (2009), 282 (Polyolefin Characterization--ICPC 2008), pages 136-149 is incorporated by reference herein. The PSP2 calculation can be generally described as a multistep process. The first step involves estimating the homopolymer (or low comonomer polymer) density of a sample from the sample's molecular weight distribution as described by Equation 1. The first step takes into account the effects of molecular weight on sample density. $1 / ρ = Σ \left({w}_{i}/{ρ}_{i}\right) = \int 1 / ρ \left(dw/dLog M\right) dLog M$ (Eq. 1) where: ρ = 1.0748-(0.0241)Log M.

Density values at molecular weights less than 720 g/mol are equal to 1.006 g/cm³ according to this method. In the second step, to further account for the added contributions to density suppression by the presence of short chain branching for each molecular weight (MW) slice, the difference between the measured bulk density of copolymer and the calculated homopolymer density is divided by the overall short chain branching (SCB) level (as measured by size exclusion chromatography-Fourier transform infrared spectroscopy or by C13-NMR) and subsequently applied to the SCB level in each MW slice. The original observed bulk density of the copolymer (down to 0.852 g/cm³) is obtained through summation of the MW slices as described above. The calculations have been simplified by assuming that all SCB levels will have the same effect on density suppression. However, it is to be understood that the effectiveness of a particular SCB level to suppress density will vary (i.e., the ability of SCB to disrupt crystallinity decreases as the level of SCB increases). Alternately, if the density of the copolymer is not known, then the effects of SCB on sample density can be estimated in the second step by using Equation 2 as described by DesLauriers and Rohlfing in Patent Application Publication No. 2007/0298508, where the change in density Δρ refers to the value that is subtracted from the value given in equation 1 on a molecular slice by slice basis. $Δρ = {C}_{1} {\left(SCB/{PDI}^{n}\right)}^{C 2} - {C}_{3} {\left(SCB/{PDI}^{n}\right)}^{C 4}$ (Eq. 2)

In Equation 2, C₁=1.25E-02, C₂=0.5, C₃=7.51E-05, C₄=0.62 and n=0.32.

The third step in calculating PSP2 is to calculate the quantity of 2 l_{c}+lₐ where l_{c} is the estimated crystalline lamella thickness (in nm) and lₐ is the estimated thickness (in nm) of the amorphous material at a particular molecular weight given by the following equations: ${T}_{m} \left(° C.\right) = \left(20587.5149640828\right) {ρ}^{3} - \left(63826.2771547794\right) {ρ}^{2} + \left(65965.7028912473\right) - 22585.2457979131$ (Eq. 3.) ${l}_{c} \left(nm\right) = \frac{0.624 nm ⋅ {T}_{m}^{0} \left(K\right)}{{T}_{m}^{0} \left(K\right) - {T}_{m} \left(K\right)}$ (Eq. 4)

In equation 3, assigned values of 20°C and 142.5°C are given for density values of 0.852 g/cm³ and 1.01 g/cm³, respectively. Equation 4 is a form of the well accepted Gibbs Thompson equation. The thickness of the amorphous layer (lₐ) is calculated using the equations 5a and 5b: ${w}_{c} = \left(\frac{{ρ}_{c}}{ρ}\right) \left(\frac{ρ - {ρ}_{a}}{{ρ}_{c} - {ρ}_{a}}\right)$ (Eq. 5a) ${l}_{a} = {ρ}_{c} {l}_{c} \left(1-{w}_{c}\right) / {ρ}_{a} {w}_{c}$ (Eq. 5b)
where: w_{c} = weight fraction crystallinity
ρ = calculated density of MW slice
ρ_{c} = density of 100% crystalline sample (assigned 1.006 g/cm³)
ρₐ = density of amorphous phase (0.852 g/cm³)

The fourth step calculates the tie molecule probability (P) for each molecular weight and respective
2 l_{c}+lₐ value according to equations 6a and 6b: 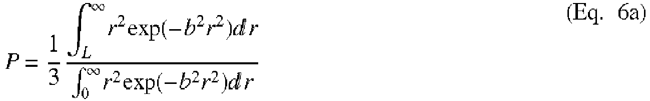 where ${b}^{2} = \frac{3}{2 {\overline{r}}^{2}}$ and *r̅*² = (*Dnl²*)*.*

The symbols above have the following meanings:
P = Probability of tie-chain formation
L = Critical distance (nm) = 2 l_{c}+lₐ
D = Chain extension factor in melt = 6.8 for polyethylene
n = Number of links = M_{w}/14 for polyethylene
l = The link length = 0.153 nm for polyethylene

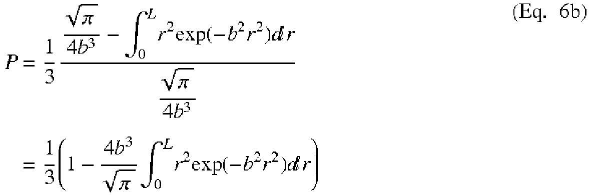

Finally PSP2 values are calculated from Equations 6a and 6b by treating this value essentially as a weighing factor (Pᵢ) for each slice of the MWD, where Pᵢ was arbitrarily multiplied x 100 and subsequently defined as PSP2ᵢ. As in all of the aforementioned calculations, this value at each slice is multiplied by the respective weight fraction (wᵢ) of the MWD profile in order to obtain a value for the bulk polymer.

A plot of the calculated wᵢ • PSP2ᵢ values against log M for the inventive example 1 is shown in Figure 2, which can also be insightful when attempting understand and predict structure property relationships. The area underneath the resulting wᵢ • PSP2ᵢ vs. log M curve defines PSP2 for the whole polymer sample.

The polymer may be made using a solution polymerization technique. In the solution polymerization of ethylene with one or more comonomers, typically C₃₋₈, preferably C₄₋₈ alpha olefins, preferably hexene or octene, most preferably octene, the monomers are typically dissolved in an inert hydrocarbon solvent, typically a C₅₋₁₂ hydrocarbon, which may be unsubstituted or substituted by a C₁₋₄ alkyl group, such as pentane, methyl pentane, hexane, heptane, octane, cyclohexane, methylcyclohexane and hydrogenated naphtha. An example of a suitable solvent that is commercially available is "Isopar E" (C₈₋₁₂ aliphatic solvent, Exxon Chemical Co.).

Catalyst and activators are also dissolved in the solvent or suspended in a diluent miscible with the solvent at reaction conditions.

### The Catalyst

The catalyst is a compound of the formula: 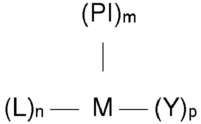 wherein M is selected from the group consisting of Ti, Zr and Hf; PI is a phosphinimine ligand of the formula: 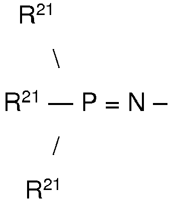 wherein each R²¹ is independently selected from the group consisting of a hydrogen atom; a halogen atom; hydrocarbyl radicals, typically C₁₋₁₀, which are unsubstituted by or further substituted by a halogen atom; C₁₋₈ alkoxy radicals; C₆₋₁₀ aryl or aryloxy radicals; amido radicals; silyl radicals of the formula:

-Si-(R²²)₃

wherein each R²² is independently selected from the group consisting of hydrogen, a C₁₋₈ alkyl or alkoxy radical and C₆₋₁₀ aryl or aryloxy radicals; and a germanyl radical of the formula:

-Ge-(R²²)₃

wherein R²² is as defined above;
L is a monoanionic cyclopentadienyl-type ligand independently selected from the group consisting of cyclopentadienyl-type ligands, Y is independently selected from the group consisting of activatable ligands; m is 1 or 2; n is 0 or 1; p is an integer and the sum of m+n+p equals the valence state of M.

The preferred phosphinimines are those in which each R²¹ is a hydrocarbyl radical, preferably a C₁₋₆ hydrocarbyl radical, most preferably a C₁₋₄ hydrocarbyl radical.

The term "cyclopentadienyl" refers to a 5-member carbon ring having delocalized bonding within the ring and typically being bound to the active catalyst site, generally a group 4 metal (M) through η⁵ - bonds. The cyclopentadienyl ligand may be unsubstituted or up to fully substituted with one or more substituents selected from the group consisting of C₁₋₁₀ hydrocarbyl radicals which are unsubstituted or further substituted by one or more substituents selected from the group consisting of a halogen atom and a C₁₋₄ alkyl radical; a halogen atom; a C₁₋₈ alkoxy radical; a C₆₋₁₀ aryl or aryloxy radical; an amido radical which is unsubstituted or substituted by up to two C₁₋₈ alkyl radicals; a phosphido radical which is unsubstituted or substituted by up to two C₁₋₈ alkyl radicals; silyl radicals of the formula -Si-(R)₃ wherein each R is independently selected from the group consisting of hydrogen, a C₁₋₈ alkyl or alkoxy radical, C₆₋₁₀ aryl or aryloxy radicals; and germanyl radicals of the formula Ge-(R)₃ wherein R is as defined above.

Preferably the cyclopentadienyl-type ligand is selected from the group consisting of a cyclopentadienyl radical, an indenyl radical and a fluorenyl radical which radicals are unsubstituted or up to fully substituted by one or more substituents selected from the group consisting of a fluorine atom, a chlorine atom; C₁₋₄ alkyl radicals; and a phenyl or benzyl radical which is unsubstituted or substituted by one or more fluorine atoms.

Activatable ligands Y may be selected from the group consisting of a halogen atom, C₁₋₄ alkyl radicals, C₆₋₂₀ aryl radicals, C₇₋₁₂ arylalkyl radicals, C₆₋₁₀ phenoxy radicals, amido radicals which may be substituted by up to two C₁₋₄ alkyl radicals and C₁₋₄ alkoxy radicals. Preferably, Y is selected from the group consisting of a chlorine atom, a methyl radical, an ethyl radical and a benzyl radical.

Suitable phosphinimine catalysts are Group 4 organometallic complexes which contain one phosphinimine ligand (as described above) and one cyclopentadienyl-type (L) ligand and two activatable ligands. The catalysts are not bridged.

### Activators

The activators for the catalyst are typically selected from the group consisting of aluminoxanes and ionic activators.

### Alumoxanes

Suitable alumoxane may be of the formula: (R⁴)₂AlO(R⁴AlO)ₘAl(R₄)₂ wherein each R⁴ is independently selected from the group consisting of C₁₋₂₀ hydrocarbyl radicals and m is from 0 to 50, preferably R⁴ is a C₁₋₄ alkyl radical and m is from 5 to 30. Methylalumoxane (or "MAO") in which each R is methyl is the preferred alumoxane.

Alumoxanes are well known as cocatalysts, particularly for metallocene-type catalysts. Alumoxanes are also readily available articles of commerce.

The use of an alumoxane cocatalyst generally requires a molar ratio of aluminum to the transition metal in the catalyst from 20:1 to 1000:1. Preferred ratios are from 50:1 to 250:1.

Commercially available MAO typically contains free aluminum alkyl (e.g. trimethylaluminum or "TMA") which may reduce catalyst activity and/or broaden the molecular weight distribution of the polymer. If a narrow molecular weight distribution polymer is required, it is preferred to treat such commercially available MAO with an additive which is capable of reacting with the TMA. Alcohols are preferred (with hindered phenols being particularly preferred) for this purpose.

### "Ionic Activators" Cocatalysts

So-called "ionic activators" are also well known for metallocene catalysts. See, for example, U.S. Patent No. 5,198,401 (Hlatky and Turner) and U.S. Patent No. 5,132,380 (Stevens and Neithamer).

Whilst not wishing to be bound by any theory, it is thought by those skilled in the art that "ionic activators" initially cause the abstraction of one or more of the activatable ligands in a manner which ionizes the catalyst into a cation, then provides a bulky, labile, non-coordinating anion which stabilizes the catalyst in a cationic form. The bulky, non-coordinating anion permits olefin polymerization to proceed at the cationic catalyst center (presumably because the non-coordinating anion is sufficiently labile to be displaced by monomer which coordinates to the catalyst. Preferred ionic activators are boron-containing ionic activators described in (i) (iii) below:
(i) compounds of the formula [R⁵]⁺[B(R⁷)₄]⁻ wherein B is a boron atom, R⁵ is an aromatic hydrocarbyl (e.g. triphenyl methyl cation) and each R⁷ is independently selected from the group consisting of phenyl radicals which are unsubstituted or substituted with from 3 to 5 substituents selected from the group consisting of a fluorine atom, a C₁₋₄ alkyl or alkoxy radical which is unsubstituted or substituted by a fluorine atom; and a silyl radical of the formula --Si--(R⁹)₃; wherein each R⁹ is independently selected from the group consisting of a hydrogen atom and a C₁₋₄ alkyl radical; and
(ii) compounds of the formula [(R⁸)ₜZH]⁺[B(R⁷)₄]⁻ wherein B is a boron atom, H is a hydrogen atom, Z is a nitrogen atom or phosphorus atom, t is 2 or 3 and R⁸ is selected from the group consisting of C₁₋₈ alkyl radicals, a phenyl radical which is unsubstituted or substituted by up to three C₁₋₄ alkyl radicals, or one R⁸ taken together with the nitrogen atom may form an anilinium radical and R⁷ is as defined above; and
(iii) compounds of the formula B(R⁷)₃ wherein R⁷ is as defined above.

In the above compounds preferably R⁷ is a pentafluorophenyl radical, and R⁵ is a triphenylmethyl cation, Z is a nitrogen atom and R⁸ is a C₁₋₄ alkyl radical or R⁸ taken together with the nitrogen atom forms an anilinium radical which is substituted by two C₁₋₄ alkyl radicals.

The "ionic activator" may abstract one or more activatable ligands so as to ionize the catalyst center into a cation but not to covalently bond with the catalyst and to provide sufficient distance between the catalyst and the ionizing activator to permit a polymerizable olefin to enter the resulting active site.

Examples of ionic activators include: triethylammonium tetra(phenyl)boron; tripropylammonium tetra(phenyl)boron; tri(n-butyl)ammonium tetra(phenyl)boron; trimethylammonium tetra(p-tolyl)boron; trimethylammonium tetra(o-tolyl)boron; tributylammonium tetra(pentafluorophenyl)boron; tripropylammonium tetra(o,p-dimethylphenyl)boron; tributylammonium tetra(m,m-dimethylphenyl)boron; tributylammonium tetra(p-trifluoromethylphenyl)boron; tributylammonium tetra(pentafluorophenyl)boron; tri(n-butyl)ammonium tetra(o-tolyl)boron; N,N-dimethylanilinium tetra(phenyl)boron; N,N-diethylanilinium tetra(phenyl)boron; N,N-diethylanilinium tetra(phenyl)n-butylboron, N,N-2,4,6-pentamethylanilinium tetra(phenyl)boron; di-(isopropyl)ammonium tetra(pentafluorophenyl)boron; dicyclohexylammonium tetra(phenyl)boron, triphenylphosphonium tetra(phenyl)boron; tri(methylphenyl)phosphonium tetra(phenyl)boron; tri(dimethylphenyl)phosphonium tetra(phenyl)boron; tropillium tetrakispentafluorophenyl borate; triphenylmethylium tetrakispentafluorophenyl borate; benzene (diazonium) tetrakispentafluorophenyl borate; tropillium phenyltrispentafluorophenyl borate; triphenylmethylium phenyltrispentafluorophenyl borate; benzene (diazonium) phenyltrispentafluorophenyl borate; tropillium tetrakis (2,3,5,6-tetrafluorophenyl) borate; triphenylmethylium tetrakis (2,3,5,6-tetrafluorophenyl) borate; benzene (diazonium) tetrakis (3,4,5-trifluorophenyl) borate; tropillium tetrakis (3,4,5-trifluorophenyl) borate; benzene (diazonium) tetrakis (3,4,5-trifluorophenyl) borate; tropillium tetrakis (1,2,2-trifluoroethenyl) borate; triphenylmethylium tetrakis (1,2,2-trifluoroethenyl) borate; benzene (diazonium) tetrakis (1,2,2-trifluoroethenyl) borate; tropillium tetrakis (2,3,4,5-tetrafluorophenyl) borate; triphenylmethylium tetrakis (2,3,4,5-tetrafluorophenyl) borate; and benzene (diazonium) tetrakis (2,3,4,5-tetrafluorophenyl) borate.

Readily commercially available ionic activators include: N,N-dimethylaniliniumtetrakispentafluorophenyl borate; triphenylmethylium tetrakispentafluorophenyl borate; and trispentafluorophenyl borane.

The ionic activator may be use at about molar equivalents of boron to group IV metal in the catalyst. Suitable molar ratios of group IV metal from the catalyst to boron may range from 1:1 to 3:1, preferably from 1:1 to 1:2.

In some instances the ionic activator may be used in combination with an alkylating activator (which may also serve as a scavenger). The ionic activator may be selected from the group consisting of (R³)ₚMgX₂₋ₚ wherein X is a halide and each R³ is independently selected from the group consisting of C₁₋₁₀ alkyl radicals and p is 1 or 2; R³Li wherein in R³ is as defined above, (R³)_{q}ZnX_{2-q} wherein R³ is as defined above, X is halogen and q is 1 or 2; (R³)ₛAlX₃₋ₛ wherein R³ is as defined above, X is halogen and s is an integer from 1 to 3. Preferably in the above compounds R³ is a C₁₋₄ alkyl radical, and X is chlorine. Commercially available compounds include triethyl aluminum (TEAL), diethyl aluminum chloride (DEAC), dibutyl magnesium ((Bu)₂Mg), and butyl ethyl magnesium (BuEtMg or BuMgEt).

If the phosphinimine catalyst is activated with a combination of ionic activators (e.g. boron compounds) and alkylating agent the molar ratio of group IV metal from the catalyst: metalloid (boron) from the ionic activator :metal from the alkylating agent may range from 1:1:1 to 1:3:10, preferably from 1:1.3 : 5 to 1:1.5:3.

### Polymerization Process

The temperature of the reactor(s) in a high temperature solution process is from about 80°C to about 300°C, preferably from about 120°C to 250°C. The upper temperature limit will be influenced by considerations that are well known to those skilled in the art, such as a desire to maximize operating temperature (so as to reduce solution viscosity), while still maintaining good polymer properties (as increased polymerization temperatures generally reduce the molecular weight of the polymer). In general, the upper polymerization temperature will preferably be between 200 and 300°C. The most preferred reaction process is a "medium pressure process", meaning that the pressure in the reactor(s) is preferably less than about 6,000 psi (about 42,000 kiloPascals or kPa). Preferred pressures are from 10,000 to 40,000 kPa (1450-5800 psi), most preferably from about 14,000-22,000kPa (2,000 psi to 3,000 psi).

In some reaction schemes the pressure in the reactor system should be high enough to maintain the polymerization solution as a single phase solution and to provide the necessary upstream pressure to feed the polymer solution from the reactor system through a heat exchanger system and to a devolatilization system. Other systems permit the solvent to separate into a polymer rich and polymer lean stream to facilitate polymer separation.

The solution polymerization process may be conducted in a stirred "reactor system" comprising one or more stirred tank reactors or in one or more loop reactors or in a mixed loop and stirred tank reactor system. The reactors may be in tandem or parallel operation. In a dual tandem reactor system, the first polymerization reactor preferably operates at lower temperature. The residence time in each reactor will depend on the design and the capacity of the reactor. Generally the reactors should be operated under conditions to achieve a thorough mixing of the reactants. In addition, it is preferred that from 20 to 60 weight % of the final polymer is polymerized in the first reactor, with the balance being polymerized in the second reactor.

A particularly useful solution polymerization process uses at least two polymerization reactors in series. The polymerization temperature in the first reactor is from about 80°C to about 180°C (preferably from about 120°C to 160°C) and the second reactor is preferably operated at a higher temperature (up to about 220°C). The most preferred reaction process is a "medium pressure process", meaning that the pressure in each reactor is preferably less than about 6,000 psi (about 42,000 kilopascals or kPa), most preferably from about 2,000 psi to 3,000 psi (about 14,000 22,000 kPa).

### EXAMPLES

### Test Methods

Mn, Mw and Mz (g/mol) were determined by high temperature Gel Permeation Chromatography (GPC) with differential refractive index detection using universal calibration (e.g. ASTM-D646-99). The molecular weight distribution (MWD) is the ratio of the weight average molecular weight (Mw) over the number average molecular weight (Mn).

GPC-FTIR was used to determine the comonomer content as a function of molecular weight. After separation of the polymer by GPC an on-line FTIR measures the concentration of the polymer and methyl end groups. Methyl end groups are used in the branch frequency calculations. Conventional calibration allows for the calculation of a molecular weight distribution.

Mathematical de-convolutions were performed to determine the relative amount of polymer, molecular weight, and comonomer content of the component made in each reactor by assuming that each polymer component follows a Flory's molecular weight distribution function and it has a homogeneous comonomer distribution across the whole molecular weight range. The uniform comonomer distribution of each resin component, which is the result from the use of a single site catalyst, allowed the estimation of the short chain branching content (SCB), in branches per 1000 carbon atoms for the first and second ethylene polymers, based on the de-convoluted relative amounts of first and second ethylene polymer components in the polyethylene composition, and their estimated resin molecular weight parameters from the above procedure.

The short chain branch frequency (SCB per 1000 carbon atoms) of copolymer samples was determined by Fourier Transform Infrared Spectroscopy (FTIR) as per ASTM D6645-01. A Thermo-Nicolet 750 Magna-IR Spectrophotometer was used for the measurement. FTIR was also used to determine internal, side chain and terminal levels of unsaturation.

Comonomer content can also be measured using ¹³C NMR techniques as discussed in Randall Rev. Macromol. Chem. Phys., C29 (2&3), p.285; U.S. Patent No. 5,292,845 and WO 2005/121239.

Polyethylene composition density (g/cm³) was measured according to ASTM D792.

Melt indexes I₂, I₆ and I₂₁ for the polyethylene composition were measured according to ASTM D1238.

The density and melt index of the first and second ethylene polymers that comprise the polyethylene composition were determined based on composition models. The following equations were used to calculate the density and melt index I2 (REFERENCE US Patent No. 8,022,143 B2, by Wang, assigned to NOVA Chemicals and published Sep. 20, 2011): $Density = 0.979863 - 5.95808 \times {10}^{- 3} {\left(\frac{SCB}{10000 C}\right)}^{0.65} - 3.8133 \times {10}^{- 4} {\left[{log}_{10}\left({M}_{n}\right)\right]}^{3} - 5.77986 \times {10}^{- 6} {\left(\frac{{M}_{w}}{{M}_{n}}\right)}^{3} + 5.57395 \times {10}^{- 3} {\left(\frac{{M}_{z}}{{M}_{w}}\right)}^{0.25}$ $\begin{matrix}{log}_{10} \left(Melt Index {I}_{2}\right) \\ = 22.326528 + 3.467 \times {10}^{- 3} {\left[{log}_{10}\left({M}_{n}\right)\right]}^{3} - 4.322582 \left[{log}_{10}\left({M}_{w}\right)\right] - 1.80061 \times {10}^{- 1} {\left[{log}_{10}\left({M}_{z}\right)\right]}^{2} + 2.6478 \times {10}^{- 2} {\left[{log}_{10}\left({M}_{z}\right)\right]}^{3}\end{matrix}$ where Mn, Mw, Mz, and SCB/1000C are the de-convoluted values of the individual ethylene polymer components, as obtained from the results of the de-convolution described above.

Primary melting peak (°C), heat of fusion (J/g) and crystallinity (%) were determined using differential scanning calorimetry (DSC) as follows: the instrument was first calibrated with indium; after which a polymer specimen is equilibrated at 0°C; the temperature was increased to 200°C at a heating rate of 10°C/min; the melt was then kept at that temperature for five minutes; the melt was then cooled to 0°C at a cooling rate of 10°C/min and kept at 0°C for five minutes; the specimen was heated a second time to 200°C at a heating rate of 10°C/min. The melting peak (Tm), heat of fusion and crystallinity reported are calculated based on the second heating cycle.

Plaques molded from the polyethylene compositions were tested according to the following ASTM methods: Bent Strip Environmental Stress Crack Resistance (ESCR), ASTM D1693; Flexural properties, ASTM D 790; Tensile properties, ASTM D 638.

Rotomolded parts were prepared in a rotational molding machine sold under the tradename Rotospeed RS3-160 by Ferry Industries Inc. The machine has two arms which rotate about a central axis within an enclosed oven. The arms are fitted with plates which rotate on an axis that is roughly perpendicular to the axis of rotation of the arm. Each arm is fitted with six cast aluminum molds that produce plastic cubes having dimensions of 12.5 inches (31.8 cm) x 12.5 inches x 12.5 inches. The arm rotation was set to about 8 revolutions per minute (rpm) and the plate rotation was set to about 2 rpm. These molds produce parts having a nominal thickness of about 0.25 inches (0.64 cm) when initially filled with a standard charge of about 3.7 kg of polyethylene resin in powder form (35 US mesh size). The temperature within the enclosed oven was maintained at a temperature of 560°C. The molds and their content were heated for specified period of time, until full powder densification is achieved. The molds were subsequently cooled in a controlled environment prior to removing the parts. Specimens were collected from the molded parts for density and color measurements The ARM impact test was performed in accordance with ASTM D5628 at a test temperature of -40°C.

### The Resin

Bimodal polyethylene compositions were prepared at a dual reactor pilot plant. In this dual reactor process the content of the first reactor flows into the second reactor, both of which are well mixed. The process operates using continuous feed streams. The catalyst (cyclopentadienyl Ti tri tert.butly phosphimine di chloride) with activator was fed to both reactors. The overall production rate was about 90 kg/hr.

The polymerization conditions are provided in Table 1.

**TABLE 1**

| | Example 1 |
|---|---|
| Ethylene split between first reactor (R1) and second reactor (R2) (R1 /(R1+R2) | 0.30 |
| Octene split between first Reactor (R1) and second reactor (R2) | 1.0 |
| Octene to ethylene ratio in fresh feed | 0.11 |
| Hydrogen in reactor 1 (ppm) | 0.8 |
| Hydrogen in reactor 2 (ppm) | 7.8 |
| Reactor 1 temperature (°C) | 140 |
| Reactor 2 temperature (°C) | 212 |
| Catalyst feed in reactor 1 (ppm) | 0.2 |
| Catalyst feed in reactor 2 (ppm) | 0.47 |

The polymer compositions prepared at the pilot plant were stabilized using a conventional additive package for rotational molding applications prior to carrying out plaque testing trials.

The properties of the resulting resins are compared to an internal NOVA Chemicals base line resin and two commercially available rotomolding resins which are referred to as comparative example 2 and 3, respectively. Results are set forth in Table 2. The properties of pressed plaques as well as rotomolded parts made from the polyethylene compositions are presented in Tables 3 and 4.

**TABLE 2**

| | Internal Base Resin | Inventive Example 1 | Commercial Resin W4101 Comparative Example 2 | Commercial Resin W4506 Comparative Example 3 |
|---|---|---|---|---|
| Density (g/cm³) | 0.9395 | 0.9395 | 0..9349 | 0.9396 |
| Melt Index I₂ (g/10 min) | 5.52 | 5.45 | 7.32 | 3.54 |
| Melt Index I₆ (g/10 min) | 20.9 | 23.9 | 28.4 | 14.1 |
| Melt Index I₂₁ (g/10 min) | 116 | 185 | 171 | 82.8 |
| Melt Flow Ratio (I₂₁/I₂) | 21 | 34 | 23.2 | 24.1 |
| Branch Freq /1000C | 3.7 | 4.6 | 7.4 | 4.4 |
| Comonomer ID | Octene | Octene | Octene | Octene |
| Comonomer Content (mole%) | 0.7 | 1.0 | 1.5 | 0.9 |
| Comonomer Content (wt%) | 2.9 | 3.7 | 5.7 | 3.4 |
| Internal Unsat/1000C | 0.19 | 0.19 | 0.02 | 0.01 |
| Side chain Unsat/1000C | 0.01 | 0.02 | 0.02 | 0. |
| Terminal Unsat/1000C | 0.1 | 0.09 | 0.4 | 0.38 |
| Mₙ | 27680 | 24106 | 24199 | 33030 |
| M_{w} | 66178 | 67459 | 58817 | 71148 |
| M_{z} | 131600 | 170027 | 118009 | 135698 |
| Polydispersity Index (M_{w}/Mₙ) | 2.39 | 2.8 | 2.43 | 2.15 |
| Index (Mz/Mw) | 2.0 | 2.5 | 2.0 | 1.9 |
| Comonomer Distribution | Reverse | Reverse | Normal | Normal |
| PSP2 | 3.9 | 5.4 | 3.1 | 3.0 |

**TABLE 3**

| | Internal Base Resin | Inventive example 1 | Commercial Resin W4101 Comparative example 2 | Commercial Resin W4101 Comparative example 3 |
|---|---|---|---|---|
| Flex Secant Mod 1% (MPa) | 809 | 836 | 624 | 757 |
| Flex Secant Mod 1% (MPa) Dev. | 23 | 18 | 20 | 36 |
| ESCR Cond A (hrs) 100% CO-360 | 74 | >1000 | 55 | 96 |
| ESCR Cond B (hrs) 100% CO-360 | 100-185 | >1000 | 55 | 96 |

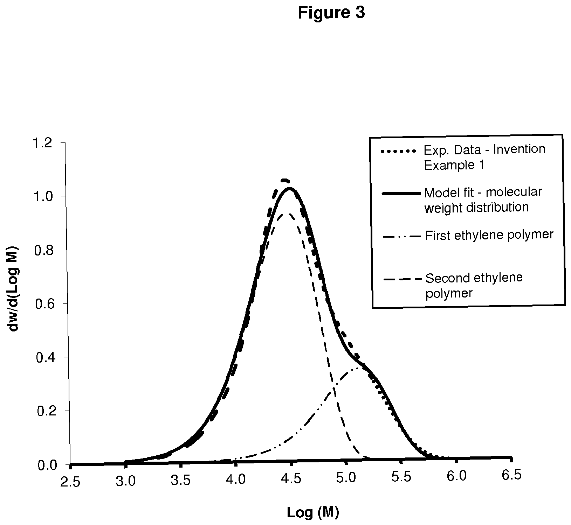

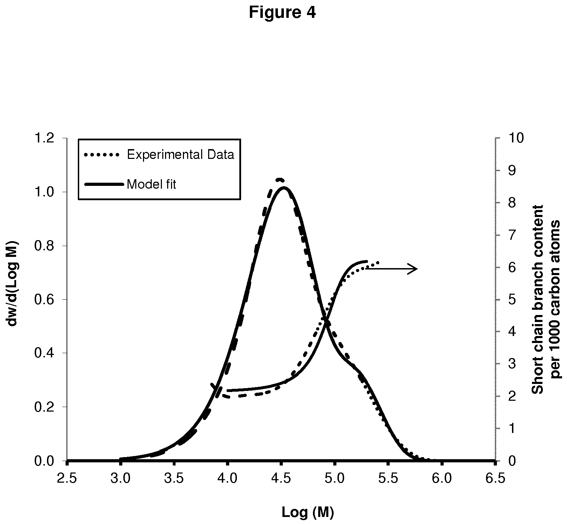

The data shows the inventive example has a good rotational molding process window (Figure 3) together with excellent ESCR and stiffness performance (Table 3, Figure 4). Compared to examples with similar densities, the invention combines both high comonomer content and reverse comonomer distribution. The molecular attributes of the invention are critical in maintaining a combination of good rotomolding processability, high ESCR and a high density that in turns favors higher stiffness.

### INDUSTRIAL APPLICABILITY

The resins of the present invention have good flow properties and high environmental stress crack resistance and are useful in rotomolding plastic parts.

## Claims

1. A bimodal polyethylene composition having a density from 0.935 to 0.942 g/cm³, a melt index I₂ determined according to ASTM D 1238 (2.16 kg 190°C - l₂) from 4.0 to 7.0 g/10min, and I₂₁ determined according to ASTM D 1238 (21.6 kg 190°C - I₂₁) from 150 to 210 g/10 min, an I₂₁/I₂ from 28 to 40, a bent strip ESCR as determined by ASTM D 1693 in 100% octoxynol -9 for conditions A and B of greater than 1000 hours, a terminal vinyl unsaturation from 0.07 to 0.14 per 1000 carbon atoms, a number average molecular weight (Mn) from 11,000 to 35,000 as determined by GPC, a weight average molecular weight (Mw) from 55,000 to 82,000 as determined by GPC, a Z-average molecular weight (Mz) from 140,000 to 200,000 as determined by GPC, an overall Mw/Mn from 2.8 to 4.0, an index of Mz/Mw from 2.0 to 2.9 comprising from 0.1 to 8 weight % of one or more C₄₋₈ alpha olefin comonomers as determined by FTIR which when de-convoluted into two components consists of:
(i) from 20 to 45 weight % of a first component consisting of from 1 to 25 wt% of one or more C₄₋₈ alpha olefin comonomers and the balance ethylene, said component having a density as determined according to ASTM D 792 from 0.920 to 0.930 g/cm³; a weight average molecular weight (Mw) from 100,000 to 180,000 g/mol, a polydispersity between 2 and 3, and a degree of short chain branching from 3 to 13 per 1000 carbon atoms as determined by GPC-FTIR; and
(ii) from 80 to 55 weight % of a second component comprising one or more of C₄₋₈ alpha olefin comonomers and the balance ethylene said component having a density as determined according to ASTM D 792 from 0.945 to 0.955 g/cm³, a weight average molecular weight (Mw) from 15,000 to 70,000, a polydispersity of less than 3, and a degree of short chain branching less than 5 per 1000 carbon atoms as determined by GPC-FTIR wherein the difference in densities between components (i) and (ii) is less than 0.030 g/cm³.

2. The bimodal polyethylene composition according to claim 1, having a primary structure parameter (PSP2) from 4 to 7.

3. The bimodal polyethylene composition according to claim 2, wherein component (i) is present in an amount from 20 to 35 weight %.

4. The bimodal polyethylene composition according to claim 3, wherein component (i) has a weight average molecular weight (Mw) from 120,000 to 150,000 g/mol.

5. The bimodal polyethylene composition according to claim 4, wherein component (ii) is present in an amount from 80 to 65 weight %.

6. The bimodal polyethylene composition according to claim 5, wherein component (ii) has a weight average molecular weight (Mw) from 20,000 to 50,000 and a polydispersity of less than 3.

7. The bimodal polyethylene composition according to claim 6, wherein the difference in densities between components (i) and (ii) is less than 0.027 g/cm³.

8. The bimodal polyethylene composition according to any one of the preceding claims, wherein the comonomer is 1-octene.

9. The bimodal polyethylene composition according to any one of the preceding claims, wherein the bimodal polyethylene has a degree of short chain branching between 1 and 8 per 1000 carbon atoms as determined by GPC-FTIR.

10. The bimodal polyethylene composition according to any one of the preceding claims, wherein the bimodal polyethylene has an internal unsaturation per 1000 carbon atoms of from 0.07 to 0.3, as determined by FTIR.

11. The bimodal polyethylene composition according to any one of the preceding claims, wherein the bimodal polyethylene has a side chain unsaturation per 1000 carbon atoms of less than 0.1, as determined by FTIR.

12. A process to make a bimodal polyethylene composition according to claim 1, comprising feeding ethylene and one or more C₄₋₈ comonomers to two solution phase reactors in the presence of a single site catalyst comprising a phosphinimine ligand together with one or more activators.

13. A rotomolded part consisting essentially of a bimodal polyethylene composition according to claim 1.

## Patentansprüche

1. Bimodale Polyethylen-Zusammensetzung mit einer Dichte von 0,935 bis 0,942 g/cm³, einem gemäß ASTM D 1238 (2,16 kg 190 °C - I₂) bestimmten Schmelzindex I₂ von 4,0 bis 7,0 g/10 min und einem gemäß ASTM D 1238 (21,6 kg 190 °C - I₂₁) bestimmten I₂₁ von 150 bis 210 g/10 min, einem I₂₁/I₂ von 28 bis 40, einem gemäß ASTM D 1693 in 100 % Octoxynol -9 für die Bedingungen A und B bestimmten Streifenbiegungs-ESCR von mehr als 1000 Stunden, einer endständigen Vinylunsättigung von 0,07 bis 0,14 pro 1000 Kohlenstoffatomen, einem mittels GPC bestimmten zahlenmittleren Molekulargewicht (Mn) von 11.000 bis 35.000, einem mittels GPC bestimmten gewichtsmittleres Molekulargewicht (Mw) von 55.000 bis 82.000, einem mittels GPC bestimmten Z-mittleren Molekulargewicht (Mz) von 140.000 bis 200.000, einem Gesamt-Mw/Mn von 2,8 bis 4,0 und einem Mz/Mw-Index von 2,0 bis 2,9, die gemäß FTIR-Bestimmung 0,1 bis 8 Gew.-% eines oder mehrerer C₄₋₈-α-Olefin-Comonomere umfasst und die nach Dekonvolution in zwei Komponenten aus Folgendem besteht:
(i) 20 bis 45 Gew.-% einer ersten Komponente, die aus 1 bis 25 Gew.-% eines oder mehrerer C₄₋₈-α-Olefin-Comonomeren und als Rest Ethylen besteht, wobei die Komponente eine mittels ASTM D 792 bestimmte Dichte von 0,920 bis 0,930 g/cm³; ein gewichtsmittleres Molekulargewicht (Mw) von 100.000 bis 180.000 g/mol, eine Polydispersität zwischen 2 und 3 und einen mittels GPC-FTIR bestimmten Kurzkettenverzweigungsgrad von 3 bis 13 pro 1000 Kohlenstoffatomen aufweist; und
(ii) 80 bis 55 Gew.-% einer zweiten Komponente, die ein oder mehrere C₄₋₈-α-Olefin-Comonomere und als Rest Ethylen umfasst, wobei die Komponente eine mittels ASTM D 792 bestimmte Dichte von 0,945 bis 0,955 g/cm³; ein gewichtsmittleres Molekulargewicht (Mw) von 15.000 bis 70.000 g/mol, eine Polydispersität unter 3 und einen mittels GPC-FTIR bestimmten Kurzkettenverzweigungsgrad von weniger als 5 pro 1000 Kohlenstoffatomen aufweist,
wobei der Dichteunterschied zwischen Komponente (i) und (ii) weniger als 0,030 g/cm³ beträgt.

2. Bimodale Polyethylen-Zusammensetzung nach Anspruch 1 mit einem Primärstrukturparameter (PSP2) von 4 bis 7.

3. Bimodale Polyethylen-Zusammensetzung nach Anspruch 2, wobei Komponente (i) in einer Menge von 20 bis 35 Gew.-% vorhanden ist.

4. Bimodale Polyethylen-Zusammensetzung nach Anspruch 3, wobei Komponente (i) ein gewichtsmittleres Molekulargewicht (Mw) von 120.000 bis 150.000 g/mol aufweist.

5. Bimodale Polyethylen-Zusammensetzung nach Anspruch 4, wobei Komponente (ii) in einer Menge von 80 bis 65 Gew.-% vorhanden ist.

6. Bimodale Polyethylen-Zusammensetzung nach Anspruch 5, wobei Komponente (ii) ein gewichtsmittleres Molekulargewicht (Mw) von 20.000 bis 50.000 g/mol und eine Polydispersität von weniger als 3 aufweist.

7. Bimodale Polyethylen-Zusammensetzung nach Anspruch 6, wobei der Dichteunterschied zwischen Komponente (i) und (ii) weniger als 0,027 g/cm³ beträgt.

8. Bimodale Polyethylen-Zusammensetzung nach einem der vorangegangenen Ansprüche, wobei das Comonomer 1-Octen ist.

9. Bimodale Polyethylen-Zusammensetzung nach einem der vorangegangenen Ansprüche, wobei das bimodale Polyethylen einen mittels GPC-FTIR bestimmten Kurzkettenverzweigungsgrad zwischen 1 und 8 pro 1000 Kohlenstoffatomen aufweist.

10. Bimodale Polyethylen-Zusammensetzung nach einem der vorangegangenen Ansprüche, wobei das bimodale Polyethylen eine mittels FTIR bestimmte innere Unsättigung pro 1000 Kohlenstoffatomen von 0,07 bis 0,3 aufweist.

11. Bimodale Polyethylen-Zusammensetzung nach einem der vorangegangenen Ansprüche, wobei das bimodale Polyethylen eine mittels FTIR bestimmte Seitenkettenunsättigung pro 1000 Kohlenstoffatomen von weniger als 0,1 aufweist.

12. Verfahren zur Herstellung einer bimodalen Polyethylen-Zusammensetzung nach Anspruch 1, welches das Zuführen von Ethylen und einem oder mehreren C₄₋₈-Comonomeren zu zwei Lösungsphasenreaktoren in Gegenwart eines einen Phosphiniminliganden umfassenden Einzelstellenkatalysators zusammen mit einem oder mehreren Aktivatoren umfasst.

13. Rotationsgeformtes Teil, das im Wesentlichen aus einer bimodalen Polyethylen-Zusammensetzung nach Anspruch 1 besteht.

## Revendications

1. Composition de polyéthylène bimodal ayant une densité de 0,935 à 0,942 g/cm³, un indice de fusion I₂ déterminé selon ASTM D 1238 (2,16 kg, 190°C-I₂) de 4,0 à 7,0 g/10 min, et I₂₁ déterminé selon ASTM D 1238 (21,6 kg, 190°C-I₂₁) de 150 à 210 g/10 min, un I₂₁/I₂ de 28 à 40, un ESCR de bande courbée tel que déterminé par ASTM D 1693 dans de l'octoxynol-9 à 100 % pour les conditions A et B supérieur à 1000 heures, une insaturation vinylique terminale de 0,07 à 0,14 pour 1000 atomes de carbone, un poids moléculaire moyen en nombre (Mn) de 11 000 à 35 000 tel que déterminé par GPC, un poids moléculaire moyen en poids (Mw) de 55 000 à 82 000 tel que déterminé par GPC, un poids moléculaire moyen Z (Mz) de 140 000 à 200 000 tel que déterminé par GPC, un Mw/Mn global de 2,8 à 4,0, un indice de Mz/Mw de 2,0 à 2,9 comprenant de 0,1 à 8 % en poids d'un ou plusieurs comonomères d'alpha-oléfine en C₄₋₈ tel que déterminé par FTIR qui, une fois décontvolués en deux composants, consiste en :
(i) de 20 à 45 % en poids d'un premier composant constitué de 1 à 25 % en poids d'un ou plusieurs comonomères d'alpha-oléfine en C₄₋₈, le reste étant de l'éthylène, ledit composant ayant une densité telle que déterminée selon ASTM D 792 de 0,920 à 0,930 g/cm³ ; un poids moléculaire moyen en poids (Mw) de 100 000 à 180 000 g/mol, une polydispersité entre 2 et 3, et un degré de ramification à chaîne courte de 3 à 13 pour 1 000 atomes de carbone tel que déterminé par GPC-FTIR ; et
(ii) de 80 à 55 % en poids d'un second composant comprenant un ou plusieurs comonomères d'alpha-oléfine en C₄₋₈, le reste étant de l'éthylène, ledit composant ayant une densité telle que déterminée selon ASTM D 792 de 0,945 à 0,955 g/cm³ ; un poids moléculaire moyen en poids (Mw) de 15 000 à 70 000 g/mol, une polydispersité inférieure à 3, et un degré de ramification de chaîne courte inférieur à 5 pour 1 000 atomes de carbone tel que déterminé par GPC-FTIR, dans laquelle la différence de densité entre les composants (i) et (ii) est inférieure à 0,030 g/cm³.

2. Composition de polyéthylène bimodal selon la revendication 1, ayant un paramètre de structure primaire (PSP2) de 4 à 7.

3. Composition de polyéthylène bimodal selon la revendication 2, dans laquelle le composant (i) est présent en une quantité de 20 à 35 % en poids.

4. Composition de polyéthylène bimodal selon la revendication 3, dans laquelle le composant (i) a un poids moléculaire moyen en poids (Mw) de 120 000 à 150 000 g/mol.

5. Composition de polyéthylène bimodal selon la revendication 4, dans laquelle le composant (ii) est présent en une quantité de 80 à 65 % en poids.

6. Composition de polyéthylène bimodal selon la revendication 5, dans laquelle le composant (ii) a un poids moléculaire moyen en poids (Mw) de 20 000 à 50 000 et une polydispersité inférieure à 3.

7. Composition de polyéthylène bimodal selon la revendication 6, dans laquelle la différence de densité entre les composants (i) et (ii) est inférieure à 0,027 g/cm³.

8. Composition de polyéthylène bimodal selon l'une quelconque des revendications précédentes, dans laquelle le comonomère est le 1-octène.

9. Composition de polyéthylène bimodal selon l'une quelconque des revendications précédentes, dans laquelle le polyéthylène bimodal a un degré de ramification de chaîne courte entre 1 et 8 pour 1 000 atomes de carbone tel que déterminé par GPC-FTIR.

10. Composition de polyéthylène bimodal selon l'une quelconque des revendications précédentes, dans laquelle le polyéthylène bimodal a une insaturation interne pour 1 000 atomes de carbone de 0,07 à 0,3, telle que déterminée par FTIR.

11. Composition de polyéthylène bimodal selon l'une quelconque des revendications précédentes, dans laquelle le polyéthylène bimodal a une insaturation de chaîne latérale pour 1 000 atomes de carbone inférieure à 0,1, telle que déterminée par FTIR.

12. Procédé pour fabriquer une composition de polyéthylène bimodal selon la revendication 1, comprenant l'alimentation d'éthylène et d'un ou plusieurs comonomères en C₄₋₈ à deux réacteurs à phase en solution en présence d'un catalyseur à site unique comprenant un ligand de phosphinimine conjointement avec un ou plusieurs activateurs.

13. Pièce rotomoulée constituée essentiellement d'une composition de polyéthylène bimodal selon la revendication 1.
